Europäisches Patentamt

European Patent Office

Office européen des brevets

(19)

(11) EP 0 692 703 A1

(12) EUROPEAN PATENT APPLICATION

(43) Date of publication:
17.01.1996 Bulletin 1996/03

(51) Int Cl.$^6$: **G01J 3/28**, G01N 21/27,
G01J 3/12

(21) Application number: 95304761.0

(22) Date of filing: 07.07.1995

(84) Designated Contracting States:
**DE FR GB**

(30) Priority: **15.07.1994 GB 9414301**

(71) Applicant: **UNICAM LIMITED**
**Cambridge CB1 2PX (GB)**

(72) Inventors:
• **Perkins, Charles Vincent**
**Cambridge CB4 2ED (GB)**
• **Sadler, Daran Anthony**
**Oundle, Peterborough (GB)**

(74) Representative: **Rackham, Stephen Neil**
**London EC2M 7LH (GB)**

(54) **Wavelength calibration of optical spectrometers**

(57)    In a method of determining a wavelength calibration function for an optical emission spectrometer with cross dispersion which describes a mapping relationship between a detected position $(x, y)$ of a spectral line and the wavelength $\lambda$ and order $\underline{m}$ of the spectral line, an error correction function $f(x,y)$ is determined by observing differences between a detected dispersion of a known emission spectrum covering a substantial part of the spectrometer detection range and a predicted dispersion of the corresponding emission spectrum calculated using an ideal calibration function mapping $(x,y) \rightarrow O(m,\lambda)$ which describes the theoretical or approximated performance of the spectrometer. The wavelength calibration function is defined by the mapping $(x,y) \rightarrow O(m,\lambda) + f(x,y)$.

Printed by Jouve (FR), 18, rue Saint-Denis, 75001 PARIS

## Description

Inductively coupled plasma optical emission spectroscopy is an analytical technique for determining the concentration of elements in a sample. A sample solution is injected into a plasma source, the temperature of which vaporises the sample, destroys any chemical bonds, ionises atoms and causes electronic excitation of the atoms and ions. A plasma spectrum consists of a continuum background and discrete spectral lines at wavelengths characteristic of any element contained in the sample. The intensity of any given spectral line is proportional to the concentration of the element in the sample and quantitative assessment of element concentration is then based upon a measurement of the intensity of light at a wavelength which is characteristic of the element.

Spectral de-convolution and measurement of the plasma emission intensity is performed by a spectrometer and detector system. One known spectrometer design is an echelle spectrometer in which an echelle grating obtains high resolution of the emission spectrum by using high orders. The multiple high orders used by an echelle spectrometer need to be spatially separated from each other and this is achieved by an auxiliary dispersive element, such as a prism or low dispersion grating, placed in the spectrometer to disperse the wavelength's perpendicular to the echelle grating. This technique is often described as "cross dispersion". An echelle spectrometer with cross dispersion results in a two dimensional representation of the spectrum emitted by the plasma.

This two dimensional representation of the plasma emission spectrum is well matched to a two dimensional array detector, such as a charge coupled device. These semiconductor devices with their relatively large area, together with excellent signal response linearity, low noise characteristics and large dynamic range, are ideally suited to inductively coupled plasma optical emission spectroscopy.

Each charge coupled device consists of a number of individual sensing elements, called pixels, usually arranged in a rectangular array. By matching the dimensions of the charge coupled device array to the extent of the spectrometer dispersion plane it is possible to record simultaneously the entire emission spectrum over a wide spectral range.

To perform either qualitative or quantitative analysis with a charge coupled device system it is necessary to determine the relationship between the spectral line wavelength and charge coupled device pixel position. This mapping between wavelength and pixel position is known as the wavelength calibration function. The wavelength calibration function for spectrometers of the same design will be different due to manufacturing tolerances and batch to batch variations in the properties of optical components. In addition, any variation in atmospheric conditions will cause small variations in the wavelength calibration function. Any technique developed for wavelength calibration must be flexible enough to compensate for changes in the calibration function whilst retaining high positional accuracy.

In one technique for wavelength calibration, the dispersion of the spectrometer is mathematically described using a knowledge of the theoretical performance of the optical components. By adjusting various parameters in the mathematical model it is possible to compensate for changes in the wavelength calibration function. This technique is quite suitable for an echelle spectrometer employing a low dispersion grating for cross dispersion. However, the technique becomes extremely difficult to implement when using a prism for cross dispersion. In a grating cross dispersion system the dispersion of the two gratings is perpendicular and non-interactive, whereas there is a complex and non-linear interaction between a prism and the echelle dispersion which is difficult to model. Also, the refraction at the prism material/air interface is a complex and sometimes unknown function of wavelength, temperature and atmospheric pressure. Consequently this technique is not applied to an echelle-prism system.

In another mathematical modelling technique, almost exclusively used in spectrometers not employing cross dispersion, an assumption is made that the dispersion in a given order can be modelled by a low order polynomial, usually quadratic or cubic. This technique is quite suitable for spectrometers in which a high groove density grating is used in a single order, but the two dimensional dispersion plane resulting from an echelle grating with cross dispersion cannot be modelled with sufficient precision using low order polynomials, especially if a prism is used for cross dispersion.

Both of the above techniques rely upon the availability of calibration lines of a known wavelength. These are usually provided by either a mercury or neon source. The position of the calibration lines is then used to "fit" the mathematical model used to describe the spectrometer dispersion. To compensate for changes in local atmospheric conditions it is necessary to re-calibrate the spectrometer frequently.

Other techniques may be used to compensate the wavelength calibration function for temperature and pressure related effects. In one technique, the spectrometer is designed so that changes in ambient temperature and pressure do not affect the wavelength calibration function. This is achieved by controlling the temperature of the opto-mechanical assembly of the spectrometer and actively compensating for effects induced by changes in atmospheric pressure. The optical system may be housed in an insulated hermetically sealed casing and thermostatically controlled warm air is circulated around the casing to maintain the optical components at a constant temperature. The pressure related refractive index effects may be compensated by mechanical displacement of the entrance slit of the spectrometer. Such a system is mechanically complex and expensive.

In another technique, the wavelength calibration function is only used as an approximate guide to the positions of spectral lines. A spectral scan around a region of interest is performed by an operator whilst sampling a known standard solution containing the element of interest. Adjustment of the spectrometer optical system, or manual input by the operator of the peak position is then used to compensate for changes in the wavelength calibration function. Clearly this technique requires a large degree of operator inter-action and also a readily available supply of standard solutions.

According to the present invention, a method of determining a wavelength calibration function for an optical emission spectrometer with cross dispersion which describes a mapping relationship between a detected position (x,y) of a spectral line and the wavelength $\lambda$ and order $\underline{m}$ of the spectral line, including the step of determining an error correction function f(x,y) by observing differences between a detected dispersion of a known emission spectrum covering a substantial part of the spectrometer detection range and a predicted dispersion of the corresponding emission spectrum calculated using an ideal calibration function mapping $(x,y) \to O(m,\lambda)$ which describes the theoretical or approximated performance of the spectrometer, wherein the wavelength calibration function is defined by the mapping $(x,y) \to O(m,\lambda)$ +f(x,y).

In the present invention, the approach taken is to model the difference between the theoretical or approximated performance of a spectrometer and the operation of the spectrometer in practice to determine the wavelength calibration function. The wavelength calibration function is obtained by determining a mathematical function which describes the differences between the measured positions of a number of spectral lines which cover the full range of the spectrometer, for which the wavelength and order is known, and the predicted positions of the same spectral lines calculated using an ideal wavelength calibration function for the spectrometer. This mathematical function can then be used to modify the spectral line positions predicted using the ideal wavelength calibration function for the spectrometer directly and so determine the wavelength and order of any detected spectral line.

Preferably, for an optical emission spectrometer with cross dispersion which includes a charge coupled device array detector defining an (x, y) co-ordinate system the method comprises the steps of:

(i) determining the wavelength calibration function $(x, y) \to O(m, \lambda)$ for an ideal spectrometer;

(ii) measuring real image co-ordinates $(x_r, y_r)$ of $\underline{n}$ spectral lines having a wavelength $\lambda$ and diffracted order $\underline{m}$ from emission spectra of real sources imaged onto the charge coupled device array;

(iii) predicting charge coupled device image co-ordinates $(x_p, y_p)$ for $\underline{n}$ corresponding spectral lines having a wavelength $\lambda$ and diffracted order $\underline{m}$ using the wavelength calibration function $(x, y) \to O(m, \lambda)$;

(iv) calculating the differences $\Delta x$ and $\Delta y$ for each spectral line in each order $\underline{m}$ where:

$$\Delta x = (x_r - x_p)$$

and

$$\Delta y = (y_r - y_p);$$

and

(v) determining a difference function f(x, y) by determining the relationship between the differences $\Delta x$ and $\Delta y$ and the (x, y) co-ordinate system,

wherein the real wavelength calibration function is defined as

$$(x_r, y_r) \to O(m, \lambda) + f(x, y).$$

The (x, y) co-ordinates of each pixel of the charge coupled device can be mapped to the wavelength $\lambda$ of a spectral line in diffraction order $\underline{m}$ and this mapping function for the ideal spectrometer may be written as

$$(x, y) \to O(m, \lambda)$$

which may be broken down into two separate mappings

$$x \to O_x (m, \lambda)$$

and

$$y \to O_y (m, \lambda).$$

In the first step (i), the wavelength calibration function $(x, y) \to O(m, \lambda)$ for an ideal spectrometer is determined. This function may take any form which approximates to the performance of the spectrometer. Preferably, a computer ray-trace model of the spectrometer design is used to determine this function. For example, for one order, m, the predicted (x,y) co-ordinates of a number of spectral lines evenly spaced throughout the order are found using a computer ray-trace model of the spectrometer. This process is repeated for a number of orders to form a "look-up-table" (LUT) containing the wavelength, order and x and y co-ordinates for all these spectral lines. The ideal wavelength calibration function of the ideal spectrometer is then contained within this LUT and to find the predicted co-ordinate position of a spectral line which is not explicitly listed in the LUT an interpolation procedure can be used. This can be a simple linear interpolation using the two nearest defined wavelengths in the LUT to the unknown wavelength of interest, or a more sophisticated polynomial interpolation. Which ever method is chosen the position of a spectral line is predictable to within 0.1 pixels of the CCD.

In the second step (ii), the actual positions $(x_r, y_r)$ of $\underline{n}$ spectral lines from a real source such as neon discharge lamp or a standard solution are imaged onto the charge coupled device and the real co-ordinates $(x_{ri}, y_{ri})$ for the $i^{th}$ spectral line with wavelength $\lambda_i$ diffracted into order $m_i$ are determined.

In the third step (iii), predicted image co-ordinates $(x_p, y_p)$ of $\underline{n}$ corresponding spectral lines are calculated, where the charge coupled device co-ordinates $(x_{pi}, y_{pi})$, of the $i^{th}$ spectral line with wavelength $\lambda_i$ diffracted into order $m_i$ are defined by the ideal wavelength calibration function $O(m_i, \lambda_i)$ contained within the LUT.

In the fourth step (iv), the difference between the real positions $(x_r, y_r)$ of the spectral lines and the predicted positions $(x_p, y_p)$ are calculated for all $\underline{n}$ lines, where

$$\Delta x_i = x_{ri} - O_x (m_i, \lambda_i)$$

and

$$\Delta y_i = y_{ri} - O_y (m_i, \lambda_i).$$

Finally, in the fifth step (v) a relationship is found between the above differences and the (x, y) co-ordinate system of the charge coupled device array to define two difference functions

$$\Delta x = f_x (x, y)$$

and

$$\Delta y = f_y (x, y).$$

These difference functions represent the difference between the dispersion of an ideal spectrometer and the particular instrument for which the difference functions were calculated. The difference functions are able to compensate for both systematic effects due to manufacturing tolerances and idiosynchracies of individual components and variable effects due to changes in atmospheric conditions.

The difference functions can be any function which best describes the difference between the predicted position of a spectral line using the ideal computer ray-trace model and the actual position determined using the physical instrument. In general, 2-dimensional difference functions are suitable, an example of which may be,

$$f_x (x,y) = a_1 + a_2 \cdot x + a_3 \cdot x^2 + a_4 \cdot y + a_5 \cdot x \cdot y + a_6 \cdot y^2 + a_7 \cdot x \cdot y^2$$

The "a" parameters may be determined using the method of general least-squares. A mercury calibration lamp may be used as a calibration source to which the difference function is to be fitted.

Once the difference functions have been determined they can be programmed into the spectrometer to automatically determine the wavelength and order corresponding to any pixel on the charge coupled device which generates a signal. The actual charge coupled device co-ordinates $(x_r, y_r)$ of a detected spectral line of wavelength $\lambda$ and diffraction order $\underline{m}$ are then given by the equations

$$x_r = O_x (m, \lambda) + f_x (x, y)$$

and

$$y_r = O_y (m, \lambda) + f_y (x, y).$$

Accordingly, the real wavelength calibration function of the spectrometer is defined by the mapping

$$(x_r, y_r) \rightarrow O(m, \lambda) + f(x, y).$$

To compensate for manufacturing tolerances in a finished spectrometer, preferably a number of spectral lines from one or more calibration lamps and/or one or more pure standard solutions are imaged onto the charge coupled device at room temperature and pressure. The calibration lamps and standard solutions are selected to emit spectral lines which cover the full wavelength range covered by the charge coupled device and in all usable orders. The actual positions of the spectral lines upon the charge coupled device are determined and compared with the predicted positions of the same lines using the ideal wavelength calibration function for that instrument and a first or "factory" difference function is calculated for the instrument. This factory difference function will compensate for the systematic discrepancy between the wavelength calibration of the ideal spectrometer and the particular instrument under test, caused by manufacturing tolerances. This factory difference function is unique to each instrument and is permanently programmed into the spectrometer before it leaves the factory. Accordingly, the spectrometer is now provided with a factory "or predicted" wavelength calibration function which takes the place of the ideal wavelength calibration function.

To compensate for relatively minor temperature and pressure related effects when the spectrometer is in use, preferably a number of spectral lines from a mercury or neon calibration lamp are imaged onto the charge coupled device as before and the position of all these spectral lines is then determined. A second difference function is then calculated between the actual spectral line positions and the predicted positions using the predicted wavelength calibration function. This second difference function can then be used to derive the "real" wavelength calibration function to determine the wavelength and order of any detected spectral line with both system and atmospheric effects accounted for. The second difference function is re-calculated at intervals to recalibrate the instrument to take account of changes in atmospheric conditions and any system changes such as the shifting or replacement of system components.

The technique of using difference functions to determine the wavelength calibration function has a number of benefits over techniques described previously. In particular, no mechanical form of temperature or pressure stabilisation is required, thus reducing the complexity of the opto-mechanical design of the spectrometer and its housing. The technique also has the ability to predict the position of spectral lines within an accuracy of less than a single charge coupled device pixel width. The only direct modelling of the spectrometer dispersion is that provided by the optical ray-trace model so that the form of the difference functions is considerably simpler than the equations describing the spectrometer dispersion.

Table 1 below shows data generated using a computer simulation to illustrate the wavelength calibration procedure of the present invention. The column "Nominal Position" contains the computer ray-trace model predicted positions of 36 spectral lines for an ideal spectrometer. The column "Actual Positions" are the positions of the same 35 spectral lines determined using a computer simulation of a real spectrometer instrument. The column "Calculated Position" column contains the sum of the Nominal Position and the Calculated Difference.

The difference function used to generate the x-position of the spectral lines is:

$$f_x(x, y) = (-0.00025695) + (0.00715383 * x) + (-0.00017825 * x^2)$$

$$+ (-0.00026209 * y) + (-0.00010852 * x * y) + (-0.00019545 * y^2) + (0.00000084 * x * y^2).$$

TABLE 1

| Wavelength | Order | Nominal Positions | | Actual Positions | | Calculated Differences | | Calculated Positions | | Discrepancy | |
|---|---|---|---|---|---|---|---|---|---|---|---|
| | | xpos | ypos | xpos | ypos | x | y | xcalc | ycalc | xdis | ydis |
| 0.207845 | 108 | -0.1376 | -3.8241 | -0.1404 | -3.8439 | -0.003159437 | -0.019868172 | -0.140759437 | -3.843968172 | -0.000359437 | -6.81723E-05 |
| 0.20822812 | 108 | -0.0767 | -2.3038 | -0.0779 | -2.314 | -0.001259762 | -0.010200001 | -0.077959762 | -2.314000001 | -5.97618E-05 | -1.32446E-09 |
| 0.20861125 | 108 | -0.0192 | -0.7708 | -0.0195 | -0.7735 | -0.000310089 | -0.002782129 | -0.019510089 | -0.773582129 | -1.00891E-05 | -8.21285E-05 |
| 0.20899437 | 108 | 0.035 | 0.7766 | 0.0346 | 0.779 | -0.000331133 | 0.002335611 | 0.034668867 | 0.778935611 | 6.88673E-05 | -6.43886E-05 |
| 0.2093775 | 108 | 0.0856 | 2.3403 | 0.0843 | 2.3453 | -0.001351084 | 0.005088999 | 0.084248916 | 2.345388999 | -5.10839E-05 | 8.8999E-05 |
| 0.20976062 | 108 | 0.1327 | 3.9218 | 0.1294 | 3.9271 | -0.003399524 | 0.005406505 | 0.129300476 | 3.927206505 | -9.95237E-05 | 0.000106505 |
| 0.18409 | 122 | -4.5538 | -3.4347 | -4.5929 | -3.5036 | -0.039678484 | -0.068894709 | -4.593478484 | -3.503594709 | -0.000578484 | 5.29068E-06 |
| 0.18439056 | 122 | -4.4767 | -2.069 | -4.5136 | -2.1277 | -0.037170433 | -0.058735415 | -4.513870433 | -2.127735415 | -0.000270433 | -3.54147E-05 |
| 0.18469111 | 122 | -4.4028 | -0.6931 | -4.4381 | -0.7435 | -0.035454318 | -0.050355386 | -4.438254318 | -0.743455386 | -0.000154318 | 4.46137E-05 |
| 0.18499167 | 122 | -4.332 | 0.6941 | -4.3666 | 0.6503 | -0.034543951 | -0.043788286 | -4.366543951 | 0.650311714 | 5.60487E-05 | 1.17144E-05 |
| 0.18529222 | 122 | -4.2646 | 2.0939 | -4.2991 | 2.0547 | -0.034459358 | -0.039077581 | -4.299059358 | 2.054822419 | 4.06416E-05 | 0.000122419 |
| 0.18559278 | 122 | -4.2005 | 3.5075 | -4.2356 | 3.471 | -0.035220063 | -0.036269417 | -4.235720063 | 3.471230583 | -0.000120063 | 0.000230583 |
| 0.166428 | 135 | -9.9155 | -3.1553 | -10.008 | -3.288 | -0.093312814 | -0.132852694 | -10.00881281 | -3.288152694 | -0.000812814 | 0.000152694 |
| 0.16667365 | 135 | -9.8164 | -1.8994 | -9.906 | -2.0209 | -0.08991873 | -0.1215878 | -9.90631873 | -2.0209878 | -0.00031873 | -8.77996E-05 |
| 0.1669193 | 135 | -9.7205 | -0.6351 | -9.8077 | -0.747 | -0.087223884 | -0.111794299 | -9.807723884 | -0.746894299 | -2.38843E-05 | 0.000105701 |
| 0.16716495 | 135 | -9.6278 | 0.6384 | -9.7133 | 0.5347 | -0.08523866 | -0.103496738 | -9.71303866 | 0.534903262 | 0.00026134 | 0.000203262 |
| 0.1674106 | 135 | -9.5385 | 1.922 | -9.6227 | 1.8249 | -0.083977321 | -0.096725333 | -9.622477321 | 1.825274667 | 0.000222679 | 0.000374667 |
| 0.16765625 | 135 | -9.4524 | 3.2166 | -9.5362 | 3.1246 | -0.08345198 | -0.091510002 | -9.53585198 | 3.125089998 | 0.00034802 | 0.000489998 |
| 0.25197 | 89 | 4.2904 | -4.574 | 4.317 | -4.549 | 0.026469424 | 0.025007 | 4.316869424 | -4.548993 | -0.000130576 | 7.00002E-06 |
| 0.25253306 | 89 | 4.3367 | -2.7593 | 4.3647 | -2.7241 | 0.027976117 | 0.035203222 | 4.364676117 | -2.724096778 | -2.38835E-05 | 3.2223E-06 |
| 0.25309613 | 89 | 4.3792 | -0.9265 | 4.4073 | -0.8843 | 0.028171243 | 0.042127016 | 4.407371243 | -0.884372984 | 7.12427E-05 | -7.29838E-05 |
| 0.25365919 | 89 | 4.4175 | 0.9273 | 4.4445 | 0.973 | 0.027014223 | 0.045681561 | 4.444514223 | 0.972981561 | 1.42234E-05 | -1.84391E-05 |
| 0.25422225 | 89 | 4.4517 | 2.8051 | 4.4762 | 2.8508 | 0.024458443 | 0.045753298 | 4.476158443 | 2.850853298 | -4.15574E-05 | 5.32981E-05 |
| 0.25478532 | 89 | 4.4816 | 4.7101 | 4.5021 | 4.7522 | 0.020445805 | 0.042202058 | 4.502045805 | 4.752302058 | -5.41954E-05 | 0.000102058 |
| 0.32449 | 69 | 7.5686 | -5.8054 | 7.6123 | -5.7525 | 0.04359356 | 0.052856044 | 7.61219356 | -5.752543956 | -0.00010644 | -4.39557E-05 |
| 0.32542378 | 69 | 7.6061 | -3.502 | 7.6514 | -3.4361 | 0.045333338 | 0.06589347 | 7.651433338 | -3.43610653 | 3.3338E-05 | -6.52975E-06 |
| 0.32635755 | 69 | 7.6382 | -1.1704 | 7.6833 | -1.0969 | 0.045003901 | 0.073570467 | 7.683203901 | -1.096829533 | -9.60986E-05 | 7.0467E-05 |
| 0.32729133 | 69 | 7.6647 | 1.1951 | 7.7073 | 1.2708 | 0.042526012 | 0.075691477 | 7.707226012 | 1.270791477 | -7.39881E-05 | -8.52277E-06 |
| 0.32822251 | 69 | 7.6853 | 3.6011 | 7.7232 | 3.6731 | 0.037796226 | 0.072001972 | 7.723096226 | 3.673101972 | -0.000103774 | 1.97212E-06 |
| 0.32915888 | 69 | 7.6999 | 6.0545 | 7.7305 | 6.1167 | 0.030685224 | 0.062181274 | 7.730685224 | 6.116681274 | 8.52244E-05 | -1.87258E-05 |
| 0.455616 | 49 | 9.8008 | -8.0516 | 9.8522 | -7.991 | 0.051271195 | 0.060402161 | 9.852071195 | -7.991197839 | -0.000128805 | -0.000197839 |
| 0.45745687 | 49 | 9.8368 | -4.8693 | 9.8918 | -4.787 | 0.054901806 | 0.082301677 | 9.891701806 | -4.786998323 | -9.81943E-05 | 1.67718E-06 |
| 0.45929774 | 49 | 9.8639 | -1.6381 | 9.9187 | -1.5443 | 0.054645179 | 0.093862113 | 9.918545179 | -1.544237887 | -0.000154821 | 6.2113E-05 |
| 0.46113861 | 49 | 9.8815 | 1.6574 | 9.9319 | 1.7519 | 0.050302791 | 0.094590189 | 9.931802791 | 1.751990189 | -9.72094E-05 | 9.01894E-05 |
| 0.46297948 | 49 | 9.8889 | 5.0346 | 9.9304 | 5.1185 | 0.041589506 | 0.083770919 | 9.930489506 | 5.118370919 | 8.95059E-05 | -0.000129081 |
| 0.46482035 | 49 | 9.8855 | 8.5136 | 9.9129 | 8.5744 | 0.028113976 | 0.060418173 | 9.913613976 | 8.574018173 | 0.000713976 | -0.000381827 |

## Claims

1. A method of determining a wavelength calibration function for an optical emission spectrometer with cross dispersion, in which the wavelength calibration function describes a mapping relationship between a detected position (x, y) of a spectral line and the wavelength $\lambda$ and order $\underline{m}$ of the spectral line, characterised in that the method includes the step of determining an error correction function $f(x,y)$ by observing differences between a detected dispersion of a known emission spectrum covering a substantial part of the spectrometer detection range and a predicted dispersion of the corresponding emission spectrum calculated using an ideal calibration function mapping $(x,y) \rightarrow O(m, \lambda)$ which describes the theoretical or approximated performance of the spectrometer, wherein the wavelength calibration function is defined by the mapping $(x,y) \rightarrow O(m,\lambda)+f(x,y)$.

2. A method according to claim 1, comprising the steps of:

(i) determining the wavelength calibration function $(x, y) \rightarrow O(m, \lambda)$ for an ideal spectrometer;

(ii) measuring real image co-ordinates $(x_r, y_r)$ of $\underline{n}$ spectral lines having a wavelength $\lambda$ and diffracted order $\underline{m}$ from emission spectra of real sources imaged onto the charge coupled device array;

(iii) predicting charge coupled device image coordinates $(x_p, y_p)$ for $\underline{n}$ corresponding spectral lines having a wavelength $\lambda$ and diffracted order $\underline{m}$ using the wavelength calibration function $(x, y) \rightarrow O(m, \lambda)$;

(iv) calculating differences $\Delta x$ and $\Delta y$ for each spectral line in each order $\underline{m}$ where:

$$\Delta x = (x_r - x_p)$$

and

$$\Delta y = (y_r - y_p);$$

and

(v) determining the function $f(x, y)$ by determining the relationship between the differences $\Delta x$ and $\Delta y$ and the $(x, y)$ co-ordinate system,

wherein the real wavelength calibration function is defined as

$$(x_r, y_r) \rightarrow O(m, \lambda) + f (x, y).$$

3. A method according to claim 2, in which a computer ray-trace model of the spectrometer is used to determine the wavelength calibration function $(x, y) \rightarrow O(m, \lambda)$.

4. A method according to claim 3, in which for one order, m, predicted $(x,y)$ co-ordinates of a number of spectral lines evenly spaced throughout the order are found using the computer ray-trace model of the spectrometer and this process is repeated for a number of orders to form a look-up-table containing the wavelength, order and x and y co-ordinates for all these spectral lines.

5. A method according to any one of claims 2 to 4, in which in step (ii), co-ordinate positions $(x_r, y_r)$ of $\underline{n}$ spectral lines from a real source are imaged onto the charge coupled device and the real co-ordinates $(x_{ri}, y_{ri})$ for the $i^{th}$ spectral line with wavelength $\lambda_i$ diffracted into order mi are determined.

6. A method according to any one of claims 2 to 5, in which in step (iii), predicted image co-ordinates $(x_p, y_p)$ of $\underline{n}$ corresponding spectral lines are calculated, where charge coupled device co-ordinates $(x_{pi}, y_{pi})$, of the $i^{th}$ spectral line with wavelength $\lambda_i$ diffracted into order $m_i$ are defined by the ideal wavelength calibration function $O(m_i, \lambda_i)$.

7. A method according to any one of claims 2 to 6, in which in step (iv), a difference between the real positions $(x_r, y_r)$ of the spectral lines and the predicted positions $(x_p, y_p)$ is calculated for all $\underline{n}$ lines, where

$$\Delta x_i = x_{ri} - O_x (m_i, \lambda_i)$$

and

$$\Delta y_i = y_{ri} - O_y (m_i, \lambda_i).$$

8. A method according to any one of claims 2 to 7, in which in step (v) a relationship is found between the differences $\Delta x_i$ and $\Delta y_i$ and the $(x, y)$ co-ordinate system of the charge coupled device array to define two error correcting functions

$$\Delta x = f_x (x, y)$$

and

$$\Delta y = f_y(x, y)$$

which are representative of the difference between the dispersion of an ideal spectrometer and the instrument for which the two error correcting functions were calculated.

9. A method according to claim 8, in which the error correcting functions are programmed into the spectrometer to automatically determine the wavelength and order corresponding to any pixel on the charge coupled device which generates a signal, whereby the actual charge coupled device co-ordinates $(x_r, y_r)$ of a detected spectral line of wavelength $\lambda$ and diffraction order $\underline{m}$ are then given by the equations

$$x_r = O_x(m, \lambda) + f_x(x, y)$$

and

$$y_r = O_y(m, \lambda) + f_y(x, y).$$

10. A method of calibrating an optical emission spectrometer with cross dispersion, in which a primary wavelength calibration function is determined in accordance with the method of any preceding claim and is subsequently programmed into the spectrometer, and subsequently, each time the spectrometer is used, a secondary wavelength calibration function is determined in accordance with the method of any preceding claim, but wherein the primary wavelength calibration function replaces the ideal wavelength calibration function for the purpose of determining the secondary wavelength calibration function.

EP 0 692 703 A1

## European Patent Office

# EUROPEAN SEARCH REPORT

**Application Number**

EP 95 30 4761

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-4 984 888 (TOBIAS)<br>* column 3, line 21 - line 58 *<br>--- | 1 | G01J3/28<br>G01N21/27<br>G01J3/12 |
| A | EP-A-0 560 006 (THE PERKIN ELMER CORPORATION)<br>* column 12, line 21 - column 15, line 33 *<br>--- | 1 | |
| A | GB-A-2 225 139 (UNITED KINGDOM ATOMIC ENERGY AUTHORITY)<br>* claims *<br>--- | 1 | |
| A | US-A-4 692 883 (NELSON ET AL.)<br>* claims *<br>----- | 1 | |
| | | | **TECHNICAL FIELDS SEARCHED** (Int.Cl.6) |
| | | | G01J<br>G01N |

The present search report has been drawn up for all claims

| Place of search | Date of completion of the search | Examiner |
|---|---|---|
| THE HAGUE | 23 October 1995 | Krametz, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)